# EUROPEAN PATENT SPECIFICATION

(11) **EP 3 086 446 B1**
(45) Date of publication and mention of the grant of the patent: **05.08.2020**
(21) Application number: 15164198.2
(22) Date of filing: 20.04.2015
(51) Int. Cl.: H02K 3/51

(54) **WOUND ROTOR FOR ROTATING ELECTRIC MACHINE**
WICKELROTOR FÜR ELEKTRISCHE DREHMASCHINE
ROTOR ENROULÉ POUR MACHINE ÉLECTRIQUE TOURNANTE

(43) Date of publication of application: 26.10.2016
(73) Proprietor: ABB Schweiz AG, 5400 Baden (CH)
(72) Inventor: Moioli, Giuseppe, I-20037 Paderno Dugnano (MI) (IT); Norcini, Emidio, I-20900 Monza (IT)
(74) Representative: De Bortoli, Eros

(56) References cited:
- FR-A- 1 526 658
- FR-A1- 2 220 910
- JP-A- S58 212 338
- US-A- 858 246
- US-A- 902 020

## Description

The present invention relates to wound rotor for a rotating electrical machine, in particular for synchronous rotating electrical machine, more in particular for synchronous traction generator for railway applications. The wound rotor of the present invention has improved features in terms of stress resistance, operating lifetime, as well as manufacturing times and costs.

Rotating electric machines, such as for example electrical motors or generators, are known since long time and widely used due to their versatility, reliability, and relatively long operating lifetime.

In general, rotating electric machines comprise a rotor suitable for rotating around its axis of rotation. Rotating electric machines, and consequently their rotor, can have various configurations depending on the application. For instance, in synchronous rotating electrical machine with smooth cylindrical rotor type, the wound rotor core can have a plurality of cavities or slots, extending for at least a portion of the longitudinal extension of the rotor core, into which cavities or slots coils are inserted in order to configure the poles, of the wound rotor.

In a particular application, the rotating electric machines are used in the railway field as synchronous traction generator on diesel-engine locomotive. In such a case, the generator should have a compact design and high performances in order to minimize weight and space requirements, and should also be able to withstand the very high stresses present during locomotive operating duty.

The generator wound rotor is usually made by a steel shaft with spiders and an iron core shrink-fitted on spider outer surfaces. The wound rotor core is made by several coils that are crammed into iron core slots or cavities and locked by wedges. An example of an improved wound rotor core particularly suitable for railway applications and a manufacturing method thereof is described in patent document EP 2498382.

In the wound rotor of know type, a complicated and cumbersome method of banding the copper coil heads is normally required in order to solidly fix the coil heads and make them able to withstand the high efforts induced by shaft rotation, with speed up to 1800rpm, centrifugal loads and diesel-engine crankshaft torsional vibrations and instantaneous accelerations due to piston engine's work principle. Document US858246A discloses a wound rotor comprising coil heads and a protecting ring, the protecting ring being externally positioned in the radial direction with respect to the coil heads and rigidly connected to a supporting ring. In practice, on the outer free sides of the coils (coil heads) at both ends of the wound rotor core (Drive End and No Drive End) a solid ring is made by banding and polymerizing a glass-fibers tape onto the coil heads.

However, such solid rings and their shape have irregularities due to the manual processes and its repeatability, in spite of the fact that such process is normally done by skilled workers only. For instance, the banding ring made by hand shows a different shape between Drive End and No Drive End rings, as well as between different wound rotors because it is difficult to carry out the proper tapes overlapping.

Moreover, the manufacturing process requires long time for execution, due to the several stops relating to banding activity and oven polymerization steps. Normally, the polymerization process needs a first step as coil heads pre-loading with a preliminary thin solid ring, and a second step as final solid ring with calculated loading and with correct ring thickness. Thus, the present manufacturing steps are therefore very expensive and require great skill and accuracy in order to be properly performed. An example of prior art manufacturing processes is described in FR1526658.

Hence, the present disclosure is aimed at providing a wound rotor for a rotating electrical machine which allows overcoming at least some of the above mentioned shortcomings.

In particular, the present invention is aimed at providing a wound rotor for a rotating electrical machine with improved stress and load resistance, prolonged operating lifetime, as well as reduced manufacturing times and costs.

Thus, the present invention relates to a wound rotor for a rotating electrical machine having a shaft rotating around an axis of rotation (X) and a core extending longitudinally along and radially around said axis of rotation (X); the core comprises a plurality of coils having first and second lateral parts positioned in corresponding first and second cavities or slots of said core, said first and second lateral parts of said coils being reciprocally connected by corresponding coil heads. The wound rotor further comprises supporting and retaining means of said coil heads, said supporting and retaining means comprising a supporting ring rigidly connected to said core, concentrically positioned with respect to said axis of rotation (X), and internally positioned in the radial direction with respect to said coil heads; the supporting and retaining means further comprises a plurality of fixing plates which are externally positioned in the radial direction with respect to said coil heads and rigidly connected to said supporting ring, said coil heads being interposed between said supporting ring and said fixing p plates.

In practice, each coil is conveniently made as a single strip spirally wounded; the lateral parts which are placed in the cavities (slots) of the rotor core and the ends (heads) are therefore part of a single body.

As better explained in the following description, thanks to the particular structure and functionality of the wound rotor for a rotating electrical machine according to the present invention, it is possible not only to considerably reduce the manufacturing time and costs, but also to dramatically improve the mechanical characteristics in terms of loads and fatigue stresses resistance.

In practice, the supporting and retaining means of the winding heads allow a much quicker and more effective fixing and maintaining into place of the coil heads with respect to the conventional banding technology with a polymerized glass-fibers tape. As better explained in the following description, the fixing plate can be conveniently made of casting steel thereby presenting high mechanical characteristics with consequent optimal load resistance both in radial and lateral direction. Moreover, the fixing plate shape can be designed and optimized in order to obtain the right load distributions according to the needs.

A rotating machine, in particular a synchronous rotating electrical machine, more in particular a synchronous traction generator for railway applications, comprising a wound rotor according to the present disclosure is also part of the present invention.

Advantageously, the rotor winding of the present invention comprises a plurality of coil groups defining a plurality of poles, and, in turn, the supporting and retaining means also comprise a plurality of fixing plates, each fixing plate being associated to the coil heads of a corresponding pole coil group.

In such a case, the fixing plates are preferably arc shaped and said supporting and retaining means comprise fixing means for fastening said fixing plates to said supporting ring, said fixing means being, for example screw or bolt means, fastening the fixing plates to the supporting ring.

As previously said, the supporting ring is generally made by steel and the supporting and retaining means of the rotor winding according to the invention advantageously comprise an insulation layer interposed between said coil heads and said supporting ring.

In an embodiment of the rotor according to the present invention, the supporting and retaining means can comprise steel bushings interposed between said fixing plates and said supporting ring.

In a particularly preferred embodiment of the wound rotor according to the present invention, the supporting and retaining means includes perpendicular plates positioned, between pole coil groups, on the internal surface of the supporting ring in the longitudinal direction and radially extending in the direction of said fixing plates. In other words such plates are positioned on the inward surface (in the longitudinal direction) of the supporting ring and extend radially outward perpendicularly to the axis of rotation (X).

Preferably, the supporting ring comprises a plurality of said perpendicular plates, each perpendicular plate being associated to a corresponding fixing plate of said plurality of fixing plates.

Advantageously, said supporting and retaining means comprise a retainer plate which rigidly couples a fixing plate to a corresponding perpendicular plate of said supporting ring.

In such a case, said retainer plate advantageously comprises a shaped body at least partially positioned in a first seat of said fixing plate and at least partially positioned in a second seat of said perpendicular plate of said supporting ring, said retainer plate having an engagement surface with said fixing plate and screw means rigidly connecting it with said perpendicular plate of said supporting ring.

Preferably, the supporting and retaining means of a wound rotor according to the invention can comprise one or more shimming insulation slats which are interposed between said winding heads and said fixing plate.

In such a case, said fixing plate can conveniently comprise corresponding seats (housings) for said one or more shimming insulation slats.

In a particular embodiment of a wound rotor according to the invention, said supporting ring advantageously comprises fixing means for its fastening to said rotor core, said fixing means radially extending from said supporting ring toward its center (i.e. toward the axis of rotation).

Further features and advantages of the present invention will be more clear from the description of preferred but not exclusive embodiments of a wound rotor for a rotating electrical machine according to the invention, shown by way of examples in the accompanying drawings, wherein:

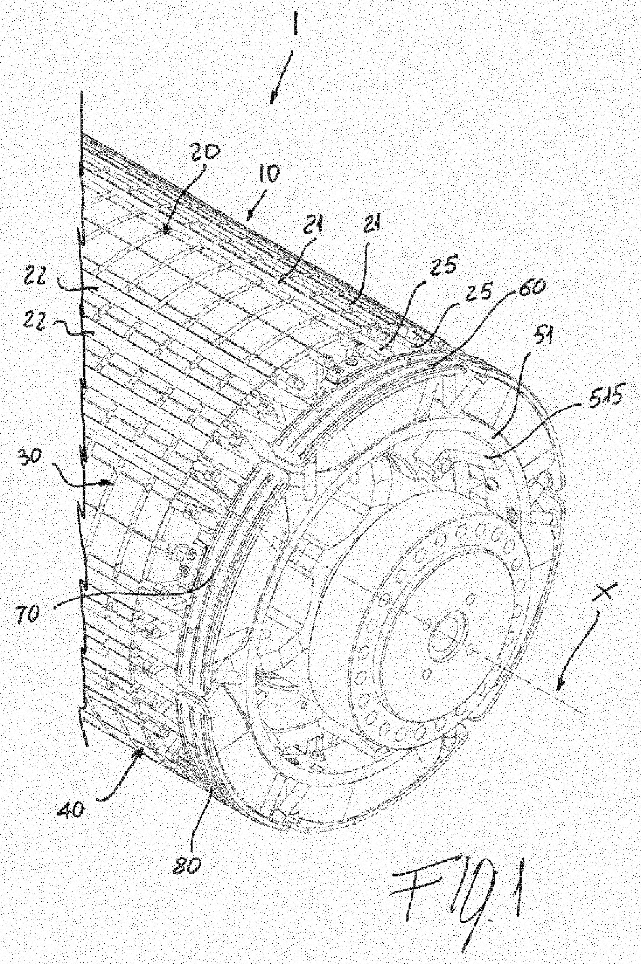

- Figure 1 is a perspective view of a first general embodiment of a wound rotor for a rotating electrical machine according to the invention;

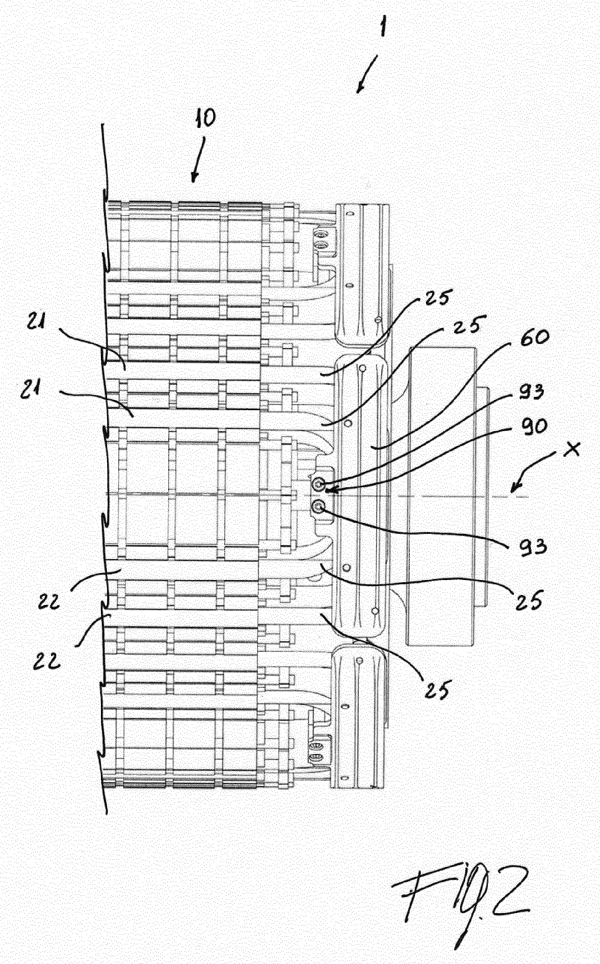

- Figure 2 is a top view of the wound rotor for a rotating electrical machine of Figure 1;

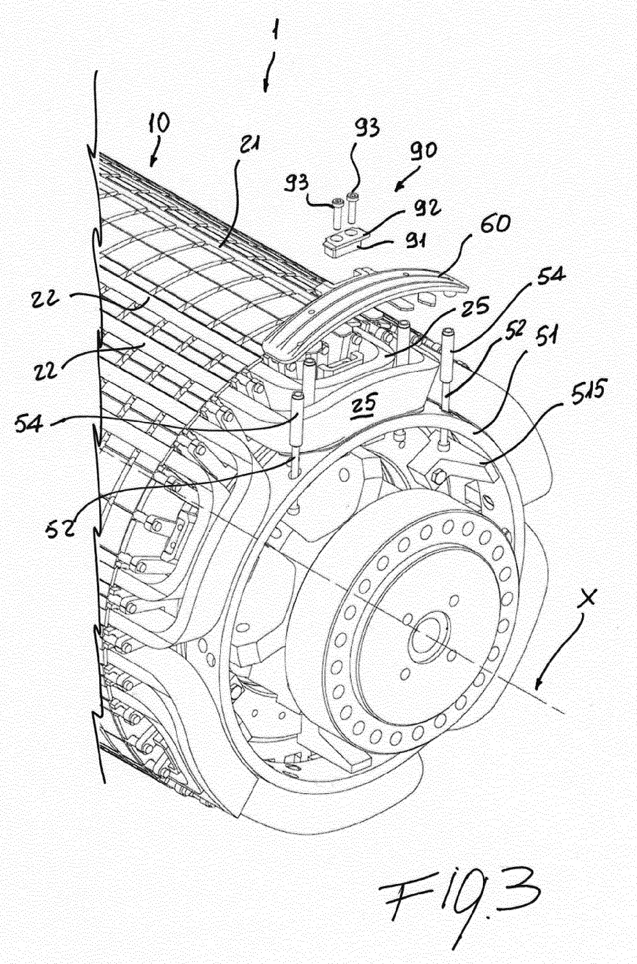

- Figure 3 is a partially exploded view of the wound rotor for a rotating electrical machine of Figure 1;
- Figure 4 is a first exploded view of an embodiment of the supporting and retaining means of a wound rotor for a rotating electrical machine according to the invention;
- Figure 5 is a second exploded view of the embodiment of the supporting and retaining means of Figure 4.

In the attached figures, for sake of simplicity, only one end of the wound rotor - with the corresponding winding coil heads and supporting and retaining means - is shown. The same structure can of course be replicated on the other end.

With reference to the attached figures, according to the present invention, a wound rotor for a rotating electrical machine, generally designated with the reference numeral 1, comprises in its more general definition a shaft rotating around an axis of rotation (X) and a core 10 which extends longitudinally along and radially around said axis of rotation (X).

The core 10 normally comprises a plurality of coils having first 21 and second 22 lateral parts which are inserted into corresponding first and second cavities or slots of said core 10. An example of the rotor core 10 and its method for manufacturing is described in details in patent document EP 2498382 and therefore will not be described in further details.

The first 21 and second 22 lateral parts of said coils are reciprocally connected by corresponding coil heads 25 which longitudinally protrudes from the rotor core 10 in correspondence of its opposite ends. As previously explained, each coil is conveniently made as a single strip spirally wounded; the lateral parts 21, 22 which are placed in the cavities (slots) of the rotor core 10 and the heads 25 are therefore part of a single body One of the features of the wound rotor 1 according to the invention is given by the presence of supporting and retaining means 50 of said coil heads 25 which are positioned in correspondence of the opposite ends of the wound rotor 1.

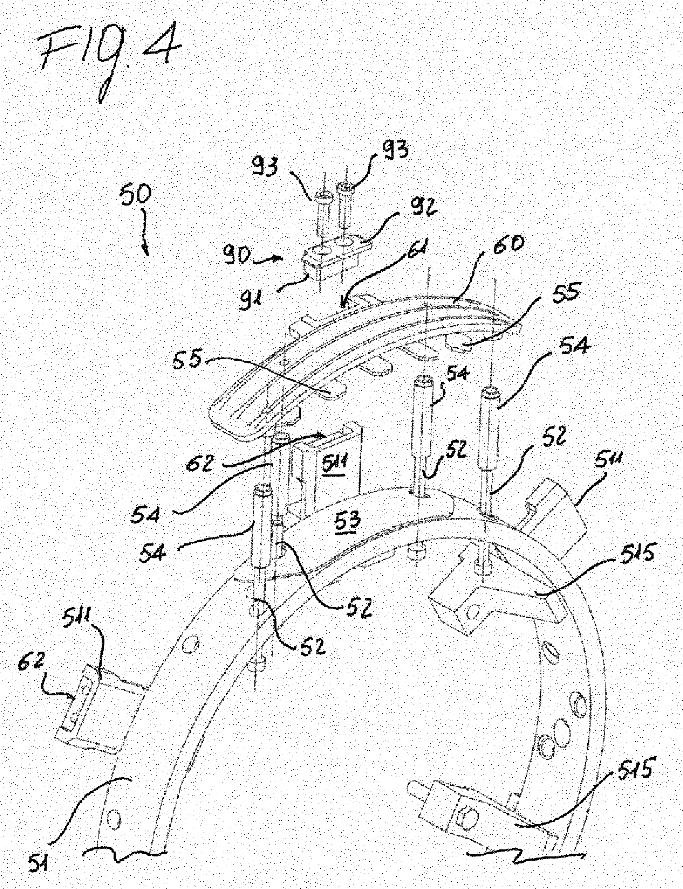

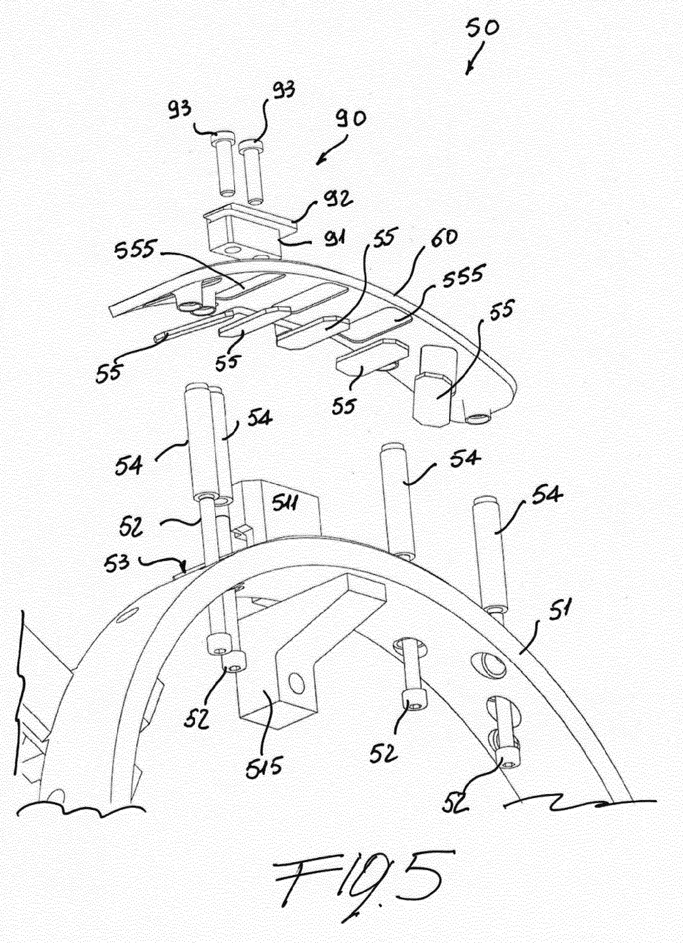

With particular reference to figures 4 and 5, the supporting and retaining means 50 comprise a steel-made supporting ring 51 which is rigidly connected to the rotor core 10. The supporting ring 51 is concentrically positioned with respect to said axis of rotation (X), and is internally positioned in the radial direction with respect to said coil heads 25.

In practice, the supporting ring 51 has a radial internal surface facing towards the axis of rotation (X), and a substantially flat radial external surface supporting the coil heads 25. With the term "substantially flat" it is meant that the radial external surface (which geometrically is the outer surface of a cylinder) of the supporting ring 51 is substantially smooth and continuous. Also, the supporting ring 51 has a longitudinal internal surface facing towards the rotor core 10 and a longitudinal external surface, opposite to said longitudinal internal surface.

A characterizing feature of the wound rotor 1 according to the invention is given by the presence of a plurality of fixing plates 60, 70, 80 which are externally positioned in the radial direction with respect to said coil heads 25 and are rigidly connected to said supporting ring 51.
As a result, the coil heads 25 are interposed between said supporting ring 51 and said fixing plate 60. In practice, the coil heads 25 are supported by the flat radial external surface of the supporting ring 51 and are kept into position by the fixing plate 60 which are rigidly connected to the supporting ring 51, thereby pressing onto the coil heads 25 and imparting stiffness to the whole assembly.

The fixing plate 60 can be conveniently obtained by casting steel and offers high mechanical characteristics. The shape of the fixing plate 60 can be designed to obtain the proper load distributions. In particular, the plate thickness and the presence of dorsal ribs, on the outer side of the fixing plate 60, can be optimized in order to obtain better performances and an optimum balance between stiffening and weight.

Even if a single fixing plate 60 can be used, the wound rotor according to the invention comprises a plurality of such fixing plate 60.

In particular, when the wound rotor 1 according to the invention comprises a plurality of winding coil groups 20, 30, 40 defining a plurality of poles, the supporting and retaining means 50 in turn comprise a plurality of fixing plates 60, 70, 80, each of said fixing plates 60, 70, 80 being associated to the coil heads 25 of a corresponding winding coil group 20, 30, 40. For example, with reference to the attached figures, the wound rotor 1 comprises six winding coil groups and six corresponding fixing plates, on each side (Drive End and No Drive End).

As shown in the attached figure, the fixing plates 60 are conveniently arc shaped so as to match, with shimming insulation slats, the curvature radius of the coil head external surfaces.

Furthermore, the supporting and retaining means 50 comprise fixing means, e.g. screw means 52, for fastening the fixing plates 60 to the supporting ring 51. Both the supporting ring 51 and the fixing plates 60 have advantageously a number of holes in order to allow the mounting of the fixing means, e.g. the insertion of the screw means 52.

With particular reference to figures 4 and 5, the supporting and retaining means 50 normally comprise an insulation layer 53 interposed between said coil heads 25 and said supporting ring 51. The material and the thickness of said insulation layer 53 can be chosen according to the needs.

In the wound rotor 1 to the invention, the supporting and retaining means 50 advantageously comprise one or more bushings 54 which are interposed between the fixing plates 60 and said supporting ring 51. Said bushings 54 are conveniently mounted coaxially with the screw means 52 and contribute to withstanding the lateral loads.

In a particularly preferred embodiment of the wound rotor 1 according to the present invention, the supporting ring 51 comprises perpendicular plates 511 which are positioned on its longitudinal internal surface and radially extend in the direction of said fixing plates 60, perpendicularly to the substantially flat radial external surface of the supporting ring 51.

In particular, as shown in the attached figure, the supporting ring 51 preferably comprises a plurality of said perpendicular plates 511, and each of said perpendicular plate 511 is associated to a corresponding fixing plate 60, 70, 80 of said plurality of fixing plates 60, 70, 80.

According to such embodiments, the supporting and retaining means 50 advantageously comprise a retainer plate 90 which rigidly couples a fixing plate 60 to a corresponding perpendicular plate 511 of said supporting ring 51.

With reference to figure 4 and 5, the retainer plate 90 generally comprises a shaped body 91 which is positioned in a first seat (housing) 61 of said fixing plate 60 and in a second seat (housing) 62 of said perpendicular plate 511 of said supporting ring 51. Furthermore, the retainer plate 90 has an engagement surface 92 with said fixing plate 60 and screw means 93 rigidly connecting it with said perpendicular plate 511 of said supporting ring 51.

In practice, the shaped body 91 of the retainer plate 90 is at least partially positioned in the first seat (housing) 61 of the fixing plate 60 and at least partially positioned in the second seat (housing) 62 of the perpendicular plate 511 of said supporting ring 51. The engagement surface 92 of the retainer plate 90 abuts against the external radial flat surface of the fixing plate 60, so that, when the screw means 93 connect the retainer plate 90 to the perpendicular plate 511 of the supporting ring 51 an inward radial force is exerted on the fixing plate 60, thereby reacting against the centrifugal radial loads generated during operation of the rotating machine.

Furthermore, the supporting and retaining means 50 advantageously comprise one or more shimming insulation slats 55 which are interposed between said coil heads 25 and said fixing plate 60.

Said shimming insulation slats 55 are normally present in order to guarantee the right contact between coil heads 25 and the fixing plate 60 and compensate possible irregularity of the radial external surface of the coil heads 25. The thickness of the shimming insulation slats 55 can be different and is normally defined during the assembly in order to have contact uniformity between coil heads 25 and the fixing plate 60.

With reference to figure 5, when shimming insulation slats 55 are present, said fixing plate 60 advantageously comprises corresponding seats (housing) 555 for said one or more shimming insulation slats 55. In the embodiment of figure 5, five shimming insulation slats 55 are used with corresponding five seats (housing) 555 in the fixing plate 60. However, the number of shimming insulation slats 55 and corresponding seats (housing) 555 can be any according to the needs.

In an embodiment of the wound rotor 1 according to the present invention, the supporting ring 51 comprises fixing means 515 for fastening it to said rotor core 10. As shown in the attached figures, said fixing means 515 can be realized as a substantially L shaped bracket. A leg (support) of said substantially L shaped bracket is fixed on the radial internal surface of the supporting ring 51, while the other leg (support) of said substantially L shaped bracket radially extends from said supporting ring 51 toward its center. This latter leg (support) of the substantially L shaped bracket is suitable to be coupled with the rotor core 10 and comprises fixing means, e.g. screw means, for fastening it to the rotor core 10.

As is clear from the above description, the technical solutions adopted for the wound rotor for a rotating electrical machine according to the present invention allow the proposed aims and the objects to be fully achieved.

The wound rotor for a rotating electrical machine according to the invention can be manufactured without any of the banding and polymerization procedures previously required for fixing the winding coil heads.

In particular, the assembly of the supporting and retaining means for the coil heads (e.g. supporting ring 51 with perpendicular plates 511, fixing plate 60, retainer plate 90, screw means 52 and 93, bushing 54) can be done very quickly and without particular efforts. Moreover, any irregularity of the radial external surface of the coil heads 25 can be easily compensated by the shimming insulation slats 55, thereby obtaining through contact onto surfaces a uniform load distribution

At the same time, the supporting and retaining means for the winding coil heads are able to withstand the radial and lateral loads generated during operation, e.g. the high efforts induced by shaft rotation, centrifugal loads and torsional vibrations.

As a result, the operating lifetime of the rotor and corresponding electrical machine is greatly improved, and can be as high as 20 years or more.

Several variations can be made to the wound rotor for a rotating electrical machine thus conceived, all falling within the scope of the attached claims. In practice, the materials used and the contingent dimensions and shapes can be any, according to requirements and to the state of the art.

## Claims

1. A wound rotor (1) for a rotating electrical machine having a shaft rotating around an axis of rotation (X) and a core (10) extending longitudinally along and radially around said axis of rotation (X), said core (10) comprising a plurality of coils having first (21) and second (22) lateral parts positioned in corresponding first and second cavities of said core (10), said first (21) and second (22) lateral parts of said coils being reciprocally connected by corresponding coil heads (25), wherein the wound rotor (1) comprises supporting and retaining means (50) of said coil heads (25), said supporting and retaining means (50) comprising a supporting ring (51) rigidly connected to said core (10), concentrically positioned with respect to said axis of rotation (X), and internally positioned in the radial direction with respect to said coil heads (25),
**characterized in that** the wound rotor (1) comprises
a plurality of fixing plates (60, 70, 80) externally positioned in the radial direction with respect to said coil heads (25) and rigidly connected to said supporting ring (51), said coil heads (25) being interposed between said supporting ring (51) and said fixing plates (60, 70, 80)

2. The wound rotor (1) according to claim 1, **characterized in that** it comprises a plurality of coil groups (20, 30, 40) defining a plurality of poles, each of said fixing plates (60, 70, 80) being associated to the coil heads (25) of a corresponding coil group (20, 30, 40).

3. The wound rotor (1) according to claim 1 or 2, **characterized in that** said fixing plates (60, 70, 80) are arc shaped and said supporting and retaining means (50) comprise fixing means for fastening said fixing plates (60, 70, 80) to said supporting ring (51).

4. The wound rotor (1) according to claim 3, **characterized in that** said fixing means are screw or bolt means (52).

5. The wound rotor (1) according to one or more of the previous claims, **characterized in that** said supporting and retaining means (50) comprise an insulation layer (53) interposed between said coil heads (25) and said supporting ring (51).

6. The wound rotor (1) according to one or more of the previous claims, **characterized in that** said supporting and retaining means (50) comprise steel bushings (54) interposed between said fixing plates (60, 70, 80) and said supporting ring (51).

7. The wound rotor (1) according to one or more of the previous claims, **characterized in that** said supporting ring (51) comprises perpendicular plates (511) positioned on its internal surface in the longitudinal direction and radially extending in the direction of said fixing plates (60, 70, 80).

8. The wound rotor (1) according to claims 2 and 7, **characterized in that** said supporting ring (51) comprises a plurality of said perpendicular plates (511), each perpendicular plate (511) being associated to a corresponding fixing plate (60, 70, 80) of said plurality of fixing plates (60, 70, 80).

9. The wound rotor (1) according claim 7 or 8, **characterized in that** said supporting and retaining means (50) comprise a retainer plate (90) rigidly coupling a fixing plate (60, 70, 80) to a corresponding perpendicular plate (511) of said supporting ring (51).

10. The wound rotor (1) according to claim 9, **characterized in that** said retainer plate (90) comprises a shaped body (91) positioned in a first seat (61) of said fixing plate (60, 70, 80) and in a second seat (62) of said perpendicular plate (511) of said supporting ring (51), said retainer plate (90) having an engagement surface (92) with said fixing plate (60, 70, 80) and screw means (93) rigidly connecting it with said perpendicular plate (511) of said supporting ring (51).

11. The wound rotor (1) according to one or more of the previous claims, **characterized in that** said supporting and retaining means (50) comprise one or more shimming insulation slats (55) interposed between said coil heads (25) and said fixing plates (60, 70, 80).

12. The wound rotor (1) according to claim 11, **characterized in that** said fixing plates (60, 70, 80) comprises seats (555) for said one or more shimming insulation slats (55).

13. The wound rotor (1) according to one or more of the previous claims, **characterized in that** said supporting ring (51) comprises fixing means (515) to said rotor core (10) radially extending from said supporting ring (51) toward the center of said supporting ring (51).

14. A rotating machine comprising a wound rotor (1) according to one or more of the previous claims.

## Patentansprüche

1. Gewickelter Rotor (1) für eine drehende elektrische Maschine, die eine Welle aufweist, die sich um eine Drehachse (X) und einen Kern (10) dreht, der sich in Längsrichtung entlang und radial um die Drehachse (X) erstreckt, wobei der Kern (10) eine Vielzahl von Spulen umfasst, die erste (21) und zweite (22) seitliche Teile aufweisen, die in entsprechenden ersten und zweiten Hohlräumen des Kerns (10) angebracht sind, wobei die ersten (21) und zweiten (22) seitlichen Teile der Spulen wechselseitig durch entsprechende Spulenköpfe (25) verbunden sind, wobei der gewickelte Rotor (1) Stütz- und Halteelemente (50) der Spulenköpfe (25) umfasst, wobei die Stütz- und Halteelemente (50) einen Stützring (51) umfassen, der starr mit dem Kern (10) verbunden ist, der in Bezug auf die Drehachse (X) konzentrisch angebracht ist und der in der radialen Richtung in Bezug auf die Spulenköpfe (25) intern angebracht ist, **dadurch gekennzeichnet, dass** der gewickelte Rotor (1) eine Vielzahl von Befestigungsplatten (60, 70, 80) umfasst, die in der radialen Richtung in Bezug auf die Spulenköpfe (25) extern angebracht sind und die starr mit dem Stützring (51) verbunden sind, wobei die Spulenköpfe (25) zwischen dem Stützring (51) und den fixierenden Platten (60, 70, 80) eingefügt sind.

2. Gewickelter Rotor (1) nach Anspruch 1, **dadurch gekennzeichnet, dass** er eine Vielzahl von Spulengruppen (20, 30, 40) umfasst, die eine Vielzahl von Polen definieren, wobei jede der Befestigungsplatten (60, 70, 80) den Spulenköpfen (25) einer entsprechenden Spulengruppe (20, 30, 40) zugeordnet ist.

3. Gewickelter Rotor (1) nach Anspruch 1 oder 2, **dadurch gekennzeichnet, dass** die Befestigungsplatten (60, 70, 80) bogenförmig sind und die Stütz- und Halteelemente (50) Befestigungselemente zum Befestigen der Befestigungsplatten (60, 70, 80) an dem Stützring (51) umfassen.

4. Gewickelter Rotor (1) nach Anspruch 3, **dadurch gekennzeichnet, dass** die Befestigungselemente Schraub- oder Bolzenelemente (52) sind.

5. Gewickelter Rotor (1) nach einem oder mehreren der vorhergehenden Ansprüche, **dadurch gekennzeichnet, dass** die Stütz- und Halteelemente (50) eine Isolationsschicht (53) umfassen, die zwischen die Spulenköpfe (25) und den Stützring (51) eingefügt ist.

6. Gewickelter Rotor (1) nach einem oder mehreren der vorhergehenden Ansprüche, **dadurch gekennzeichnet, dass** die Stütz- und Halteelemente (50) Stahlbuchsen (54) umfassen, die zwischen die Befestigungsplatten (60, 70, 80) und den Stützring (51) eingefügt sind.

7. Gewickelter Rotor (1) nach einem oder mehreren der vorhergehenden Ansprüche, **dadurch gekennzeichnet, dass** der Stützring (51) senkrechte Platten (511) umfasst, die an ihrer Innenseite in der Längsrichtung angebracht sind und die sich radial in Richtung auf die Befestigungsplatten (60, 70, 80) erstrecken.

8. Gewickelter Rotor (1) nach Anspruch 2 und 7, **dadurch gekennzeichnet, dass** der Stützring (51) eine Vielzahl von senkrechten Platten (511) umfasst, wobei jede senkrechte Platte (511) einer entsprechenden Befestigungsplatte (60, 70, 80) aus der Vielzahl von Befestigungsplatten (60, 70, 80) zugeordnet ist.

9. Gewickelter Rotor (1) nach Anspruch 7 oder 8, **dadurch gekennzeichnet, dass** die Stütz- und Halteelemente (50) eine Halteplatte (90) umfassen, die eine Befestigungsplatte (60, 70, 80) starr mit einer entsprechenden senkrechten Platte (511) des Stützrings (51) verbindet.

10. Gewickelter Rotor (1) nach Anspruch 9, **dadurch gekennzeichnet, dass** die Halteplatte (90) einen geformten Körper (91) umfasst, der in einem ersten Sitz (61) der Befestigungsplatte (60, 70, 80) und in einem zweiten Sitz (62) der senkrechten Platte (511) des Stützrings (51) angebracht ist, wobei die Halteplatte (90) eine Eingriffsfläche (92) mit der Befestigungsplatte (60, 70, 80) und Schraubelemente (93) umfasst, die sie starr mit der senkrechten Platte (511) des Stützrings (51) verbinden.

11. Gewickelter Rotor (1) nach einem oder mehreren der vorhergehenden Ansprüche, **dadurch gekennzeichnet, dass** die Stütz- und Halteelemente (50) eine oder mehrere Unterlegisolationslamellen (55) umfassen, die zwischen die Spulenköpfe (25) und die Befestigungsplatten (60, 70, 80) eingefügt sind.

12. Gewickelter Rotor (1) nach Anspruch 11, **dadurch gekennzeichnet, dass** die Befestigungsplatten (60, 70, 80) Sitze (555) für die eine oder mehreren Unterlegisolationslamellen (55) umfassen.

13. Gewickelter Rotor (1) nach einem oder mehreren der vorhergehenden Ansprüche, **dadurch gekennzeichnet, dass** der Stützring (51) Befestigungselemente (515) zu dem Rotorkern (10) umfasst, die sich radial von dem Stützring (51) in Richtung auf das Zentrum des Stützrings (51) erstrecken.

14. Drehende Maschine, die einen gewickelten Rotor (1) nach einem oder mehreren der vorhergehenden Ansprüche umfasst.

## Revendications

1. Rotor enroulé (1) pour une machine électrique tournante ayant un arbre tournant autour d'un axe de rotation (X) et un noyau (10) s'étendant longitudinalement le long et radialement autour dudit axe de rotation (X), ledit noyau (10) comprenant une pluralité de bobines ayant des première (21) et seconde (22) parties latérales positionnées dans des première et seconde cavités correspondantes dudit noyau (10), lesdites première (21) et seconde (22) parties latérales desdites bobines étant connectées mutuellement par des têtes de bobine correspondantes (25), le rotor enroulé (1) comprenant :
des moyens de support et de retenue (50) desdites têtes de bobines (25), lesdits moyens de support et de retenue (50) comprenant une bague de support (51) reliée de manière rigide audit noyau (10), positionnée concentriquement par rapport audit axe de rotation (X) et positionnée intérieurement dans la direction radiale par rapport auxdites têtes de bobines (25),
**caractérisé en ce que** le rotor enroulé (1) comprend
une pluralité de plaques de fixation (60, 70, 80) positionnées extérieurement dans la direction radiale par rapport auxdites têtes de bobines (25) et reliées de manière rigide à ladite bague de support (51), lesdites têtes de bobines (25) étant interposées entre ladite bague de support (51) et lesdites plaques de fixation (60, 70, 80).

2. Rotor enroulé (1) selon la revendication 1, **caractérisé en ce qu'**il comprend une pluralité de groupes de bobines (20, 30, 40) définissant une pluralité de pôles, chacune desdites plaques de fixation (60, 70, 80) étant associée aux têtes de bobines (25) d'un groupe de bobines correspondant (20, 30, 40).

3. Rotor enroulé (1) selon la revendication 1 ou 2, **caractérisé en ce que** lesdites plaques de fixation (60, 70, 80) sont en forme d'arc et lesdits moyens de support et de retenue (50) comprennent des moyens de fixation pour fixer lesdites plaques de fixation (60, 70, 80) à ladite bague de support (51).

4. Rotor enroulé (1) selon la revendication 3, **caractérisé en ce que** lesdits moyens de fixation sont des moyens à vis ou à boulons (52).

5. Rotor enroulé (1) selon une ou plusieurs des revendications précédentes, **caractérisé en ce que** lesdits moyens de support et de retenue (50) comprennent une couche d'isolation (53) interposée entre lesdites têtes de bobines (25) et ladite bague de support (51).

6. Rotor enroulé (1) selon une ou plusieurs des revendications précédentes, **caractérisé en ce que** lesdits moyens de support et de retenue (50) comprennent des douilles en acier (54) interposées entre lesdites plaques de fixation (60, 70, 80) et ladite bague de support (51).

7. Rotor enroulé (1) selon une ou plusieurs des revendications précédentes, **caractérisé en ce que** ladite bague de support (51) comprend des plaques perpendiculaires (511) positionnées sur sa surface interne dans la direction longitudinale et s'étendant radialement en direction desdites plaques de fixation (60, 70, 80).

8. Rotor enroulé (1) selon les revendications 2 et 7, **caractérisé en ce que** ladite bague de support (51) comprend une pluralité desdites plaques perpendiculaires (511), chaque plaque perpendiculaire (511) étant associée à une plaque de fixation correspondante (60, 70, 80) de ladite pluralité de plaques de fixation (60, 70, 80).

9. Rotor enroulé (1) selon la revendication 7 ou 8, **caractérisé en ce que** lesdits moyens de support et de retenue (50) comprennent une plaque de retenue (90) couplant de manière rigide une plaque de fixation (60, 70, 80) à une plaque perpendiculaire correspondante (511) de ladite bague de support (51).

10. Rotor enroulé (1) selon la revendication 9, **caractérisé en ce que** ladite plaque de retenue (90) comprend un corps profilé (91) positionné dans un premier siège (61) de ladite plaque de fixation (60, 70, 80) et dans un second siège (62) de ladite plaque perpendiculaire (511) de ladite bague de support (51), ladite plaque de retenue (90) ayant une surface d'engagement (92) avec ladite plaque de fixation (60, 70, 80) et des moyens de vissage (93) la reliant de manière rigide à ladite plaque perpendiculaire (511) de ladite bague de support (51).

11. Rotor enroulé (1) selon une ou plusieurs des revendications précédentes, **caractérisé en ce que** lesdits moyens de support et de retenue (50) comprennent une ou plusieurs lamelles isolantes de calage (55) interposées entre lesdites têtes de bobines (25) et lesdites plaques de fixation (60, 70, 80).

12. Rotor enroulé (1) selon la revendication 11, **caractérisé en ce que** lesdites plaques de fixation (60, 70, 80) comprennent des sièges (555) pour lesdites une ou plusieurs lamelles isolantes de calage (55).

13. Rotor enroulé (1) selon une ou plusieurs des revendications précédentes, **caractérisé en ce que** ladite bague de support (51) comprend des moyens de fixation (515) audit noyau de rotor (10) s'étendant radialement depuis ladite bague de support (51) vers le centre de ladite bague de support (51).

14. Machine tournante comprenant un rotor enroulé (1) selon une ou plusieurs des revendications précédentes.
